# EUROPÄISCHE PATENTSCHRIFT

(11) **EP 1 172 035 B1**
(45) Veröffentlichungstag und Bekanntmachung des Hinweises auf die Patenterteilung: **30.06.2004**
(21) Anmeldenummer: 01110256.3
(22) Anmeldetag: 25.04.2001
(51) Int. Cl.: A22C 11/00

(54) **Verfahren und Vorrichtung zur Lageänderung von Wurstketten**
Method and device for changing the position of linked sausage strands
Procédé et dispositif pour changer la position de chaînes de saucisses

(30) Priorität: 10.07.2000 DE 10033494
(43) Veröffentlichungstag der Anmeldung: 16.01.2002
(73) Patentinhaber: Albert Handtmann Maschinenfabrik GmbH & Co. KG, 88400 Biberach (DE)
(72) Erfinder: Müller, Gerhard, 88433 Schemmerhofen (DE)
(74) Vertreter: Grünecker, Kinkeldey, Stockmair & Schwanhäusser Anwaltssozietät

(56) Entgegenhaltungen:
- GB-A- 1 495 694
- US-A- 3 790 685
- US-A- 4 682 385
- US-A- 5 100 364
- US-A- 5 163 864

## Beschreibung

Die Erfindung betrifft ein Verfahren und eine Vorrichtung zur Lageänderung von Wurstketten bei der Wurstherstellung unter Einsatz von zwei parallel angeordneten Endlostransportbändem und die Verwendung für die Übergabe von Wurstketten von einer Abdrehstation zu einer Aufhängestation.

Bei der Wurstherstellung werden Würste in Wurstketten wie in US-A-5 163 864 beschrieben hergestellt. Das Wurstbrät wird in einer Füllmaschine in den Wurstdarm gepresst. In vordefinierten Abständen wird der Wurstdarm abgedreht, um einzelne Würste zu bilden, die an den Abdrehstellen in der Art einer Kette miteinander verbunden sind. Im Anschluss an die Abdreheinrichtung treten die Wurstketten z.B. zwischen zwei Transportbänder, die die Wurstkette von der Abdrehstation mit einer definierten Geschwindigkeit abtransportieren. Durch die vordefinierte Geschwindigkeit wird die Länge einer Wurst zwischen zwei Abdrehstellen definiert. Von den Transportbändern kann die Wurstkette an eine Aufhängestation gegeben werden, wo die Wurstkette an einzelnen Abdrehstellen platzsparend an entsprechenden Haken aufgehängt wird. Mit Hilfe der Haken kann die Wurstkette dann auf entsprechenden Schienen abtransportiert werden.

Am Wurstdarmende muss die Wurstkette verknüpft werden. Auch wenn der Wurstdarm reißt oder platzt, muss eine Bedienperson eingreifen können. Dazu ist es oftmals notwendig, dass die Bedienperson in gebückter Haltung unterhalb der Aufhängehaken tätig ist.

Die Höhe über dem Boden, mit der die Wurstkette aus der Abdreheinheit austritt, ist durch den Aufbau der Füllmaschine vorgegeben. Diese kann nicht zu hoch gewählt werden, damit sie noch problemlos gefüllt werden kann. Außerdem ist eine zu hohe Lagerung aus Sicherheitsgründen nicht wünschenswert.

Aufgabe der vorliegenden Erfindung ist es, ein Verfahren und eine Vorrichtung anzugeben, die ein verbessertes Handling der Maschine ermöglichen.

Diese Aufgabe wird mit einem Verfahren mit den Merkmalen des Anspruchs 1 und einer Vorrichtung mit den Merkmalen des Anspruchs 6 gelöst.

Bei dem erfindungsgemäßen Verfahren wird die Wurstkette im Anschluss an die Abdrehstation von zwei Endlostransportbändern erfasst, die zunächst ohne Richtungsänderung für den Abtransport der Wurstkette sorgen. In einem Ablenkungsbereich werden die Transportbänder in eine zweite Richtung abgelenkt, um die Wurstkette in eine zweite Richtung ansteigend auf eine größere Höhe zu transportieren. Der Abstand zwischen den Transportbändern im Bereich des Transportes in der zweiten Richtung ist größer als der Abstand der Transportbänder in dem Bereich des Transportes in der ersten Richtung.

Im Bereich der Ablenkung ist der Verfahrweg eines Transportbandes kürzer als der Verfahrweg des anderen Transportbandes. Dadurch verschieben sich die Transportbänder im Ablenkbereich in der Bewegungsrichtung longitudinal zueinander. Befindet sich zwischen den Transportbändem eine Wurstportion, kann dadurch eine Reibung entstehen, die zur Verletzung der Wurstportion führen kann. Durch die Erhöhung des Abstandes im zweiten Bereich, in dem die Wurstkette in die zweite Richtung transportiert wird, erweitert sich der Abstand der Transportbänder im Ablenkungsbereich. Auch dadurch wird der Reibungseffekt auf die Wurstportionen verringert und eine Verletzung ist unwahrscheinlicher.

Im Bereich des Transportes in der ersten Richtung kann der Abstand der Transportbänder gleich dem Wurstkaliber sein. Ein sicherer Halt der Wurstkette zwischen den Transportbändern während des Abdrehprozesses ist jedoch gewährleistet, wenn der Abstand in dem Bereich des Transportes der ersten Richtung kleiner gewählt wird als das gewünschte Füllkaliber. Auf diese Weise wird die jeweilige Wurst sicher ergriffen und transportiert. Die zuverlässige Übernahme der Wurstkette durch die Transportbänder ist gewährleistet, wenn die Wurstkette über eine gewisse Länge in der ersten Richtung transportiert wird, d.h. der Transportweg in der ersten Richtung wird so gewählt, dass auch längere Würste sicher ergriffen werden können. In der Praxis hat sich hier für alle gängigen unterschiedlichen Wurstlängen eine Förderlänge in der ersten Richtung von wenigstens 15 cm als geeignet erwiesen.

Aus dem zweiten Bereich kann die Wurstkette wieder entnommen werden. Bei einer vorteilhaften Ausgestaltung des Verfahrens schließt sich an den Bereich der Transportrichtung in der zweiten Richtung wiederum ein Ablenkungsbereich an, in dem die Wurstkette aus der zweiten Richtung in eine dritte Richtung abgelenkt wird, die zur ersten Richtung parallel ist. Durch dieses Verfahren wird die Wurstkette also parallel zu ihrer ursprünglichen Transportrichtung versetzt. Z.B. bei waagerechtem Eintritt zwischen die Transportbänder kann mit dem vorteilhaften Verfahren die Wurstkette auf ein höheres Niveau gehoben werden und tritt wiederum parallel aus den Transportbändem aus.

Zur sicheren Übergabe an eine Folgestation ist es vorteilhaft, wenn der Abstand der Transportbänder im Bereich des Transportes in der dritten Richtung kleiner ist als im Bereich des Transportes in der zweiten Richtung.

Eine schonende Übergabe ist möglich, wenn der Abstand in dem Bereich des Transportes in der dritten Richtung größer oder gleich dem Füllkaliber einer Wurstportion ist.

Vorteilhafterweise wird die Transportlänge in der dritten Richtung wiederum als für alle gängigen Wurstlängen ausreichend gewählt ( auch hier wenigstens ca. 15 cm ), um eine lagerichtige Übergabe zu ermöglichen.

Eine erfindungsgemäße Vorrichtung zur Durchführung des erfindungsgemäßen Verfahrens umfasst zwei parallele Endlostransportbänder mit einem ersten Bereich zum Transport der Wurstkette in einer ersten Richtung, in dem die Transportbänder einen ersten Abstand voneinander aufweisen, einen ersten Ablenkungsbereich, in dem die Transportbänder parallel zueinander aus der ersten Richtung in eine zweite Richtung abgelenkt werden, einen zweiten Bereich zum Transport der Wurstkette in einer zweiten Richtung, in der die Transportbänder einen zweiten Abstand voneinander haben, wobei der zweite Abstand größer als der erste Abstand ist.

Die erfindungsgemäße Vorrichtung kann ausgelegt sein, um Würste definierter Länge und definierten Kalibers zu transportieren. Vorteilhafterweise sind jedoch Einstellvorrichtungen vorgesehen, mit denen der Abstand im ersten Bereich bzw. im zweiten Bereich bzw. im dritten Bereich eingestellt werden können, so dass Wurstkaliber verschiedenen Ausmaßes verarbeitet werden können.

Die Endlostransportbänder können von einzelnen Motoren angetrieben werden, deren Geschwindigkeit aufeinander abgestimmt ist. Besonders einfach ist jedoch eine Ausführung, bei der die beiden Transportbänder mit einer entsprechenden Getriebeeinrichtung von dem selben Motor angetrieben werden. So ist eine synchrone Bewegung gewährleistet.

Eine Ausführungsform der erfindungsgemäßen Vorrichtung und die Durchführung des erfindungsgemäßen Verfahrens werden anhand der anliegenden Figuren erläutert. Dabei zeigt:
- Figur 1: eine erfindungsgemäße Vorrichtung im Einsatz bei der Wurstverarbeitung,
- Figur 2: das Detail der Figur 1 in vergrößertem Maßstab,
- Figur 3: das Detail X der Figur 1 im ersten Ablenkungsbereich,
- Figur 4: eine Schnittansicht entlang der Schnittfläche B in Figur 3, und
- Figur 5: eine konventionelle Wurstverarbeitungseinrichtung.

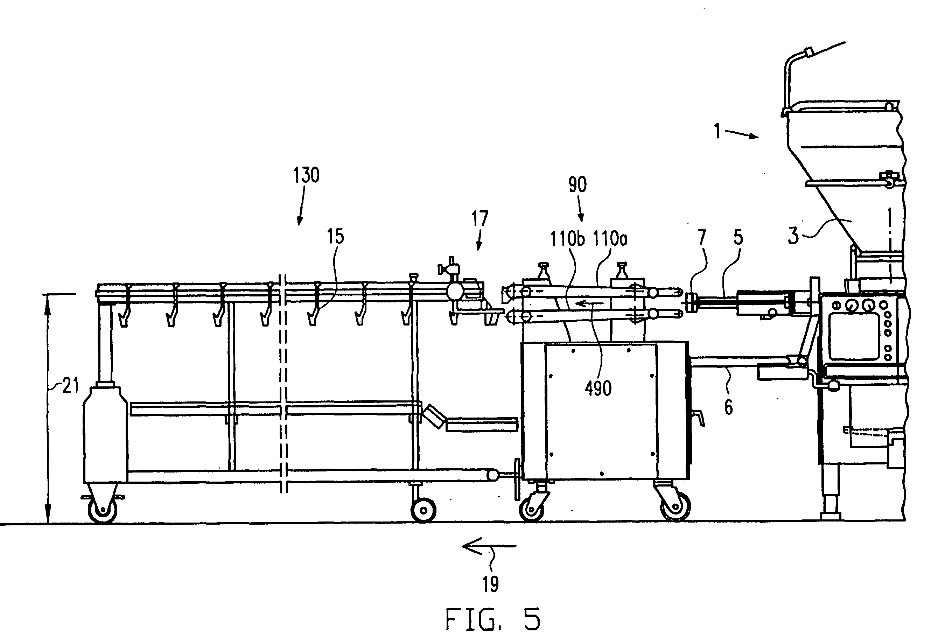

Figur 5 zeigt einen Teil einer bekannten Wurstverarbeitungslinie. 1 bezeichnet eine Füllmaschine zum Befüllen von Därmen mit Wurstbrät. Das Wurstbrät wird durch einen Trichter 3 eingefüllt und z.B. mit einer Flügelzellenpumpe in bekannter Weise durch ein Füllrohr 5 ausgestoßen. Auf dem Füllrohr 5 befindet sich eine Darmraupe, die durch das ausgestoßene Füllgut abgezogen wird. 7 bezeichnet ein Bremsring- bzw. Abdrehgetriebe. Die mit Wurstbrät gefüllte Darmhülle tritt durch dieses Abdrehgetriebe und wird von den Transportbändem 110a, 110b erfasst, die als Endlosbänder ausgebildet sind und zwischen sich einen Kanal für die Würste bilden. Die Endlosbänder 110a, 110b werden in der Weise angetrieben, dass sich die Würste in der Transportrichtung 490 fortbewegen. Über eine Verbindung 6 ist diese Transporteinheit mit der Füllmaschine verbunden, um eine synchrone Bewegung zu erreichen. Immer wenn die Portion für eine Wurst das Abdrehgetriebe 7 passiert hat, dreht sich das Füllrohr 5 mit der darauf befindlichen Darmraupe und ggf. das Abdrehgetriebe, um eine Abdrehstelle in dem Wurststrang zu bilden. Das bereits ausgetretene Füllgut in der Darmraupe wird dabei von den Transportbändern 110a, 110b an seiner Drehung gehindert. Auf diese Weise entsteht eine Abteilstelle zwischen den Würsten. In waagerechter Richtung 490 wird die so gebildete Wurstkette von der Transporteinheit 90 weitertransportiert und gelangt zu der Aufhängeeinheit 130. Diese umfasst Aufhängehaken 15 und eine Einfädeleinheit 17. Der Wurststrang tritt aus der Transporteinheit 90 zwischen den zwei Transportbändern 110a, 110b hervor und wird in der Einfädeleinheit 17 mit den Abdrehstellen auf die Aufhängehaken 15 gehängt. Durch die fortlaufende Nachführung des Wurststranges werden die Aufhängehaken 15 zusammengeschoben, so dass sich ein spiralförmiger Wurststrang bildet. Die Gesamttransportrichtung des Wurstbrätes bzw. der Wurstportionen ist mit 19 bezeichnet. Die ungefähre Höhe der Bewegung des Wurststranges in der gesamten Anordnung ist mit 21 bezeichnet. Im Anschluss an die Aufhängeeinheit 130 wird die spiralförmig zusammengeschobene Wurstkette abgenommen und/oder zu weiteren Verarbeitungs- bzw. Verpackungsstationen transportiert.

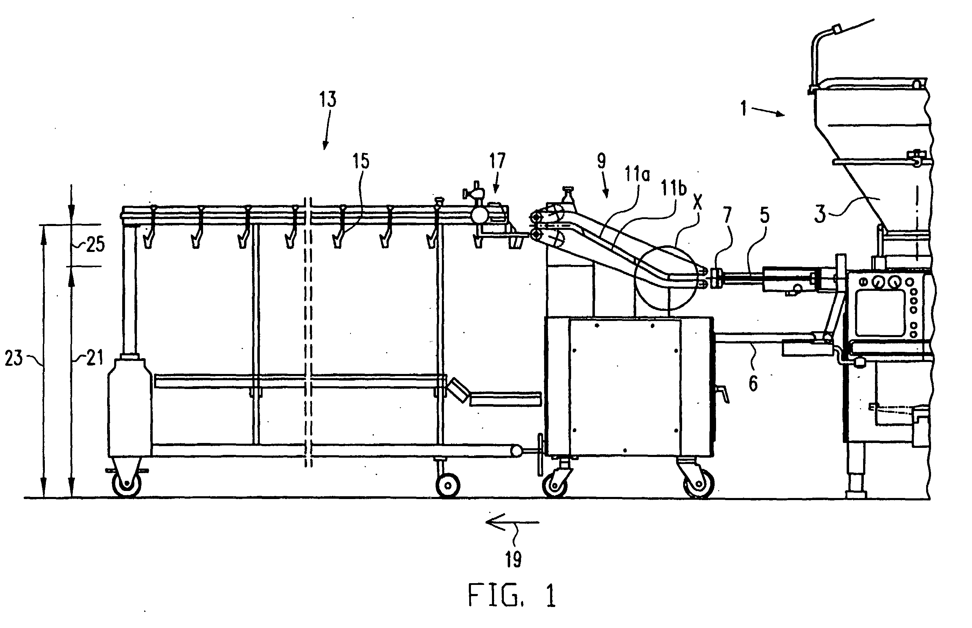

Figur 1 zeigt einen entsprechenden Teil einer Wurstverarbeitungslinie mit einer erfindungsgemäßen Transporteinheit 9. Gleiche Elemente sind mit den gleichen Bezugsziffern wie bei der bekannten Anordnung der Figur 5 bezeichnet. In Figur 1 ist das Transportband (Mitte) der Aufhängeeinheit 13 in einer Höhe 23, z.b ca. 130 cm über dem Boden verlaufend angeordnet, während die Höhe 21 des Füllrohres 5 bzw. des Abdrehgetriebes 7 bei ca. 105 cm liegen kann. Dadurch ergibt sich ein Höhenunterschied 25 von ca. 25 cm, wobei diese Zahlenangaben selbsredend nur beispielhaft genannt sind.

Die erfindungsgemäße Ausführungsform 9 der Transportvorrichtung zwischen dem Abdrehgetriebe 7 und der Aufhängevorrichtung 13 umfasst Bereiche der Transportbänder, die schräg nach oben führen.

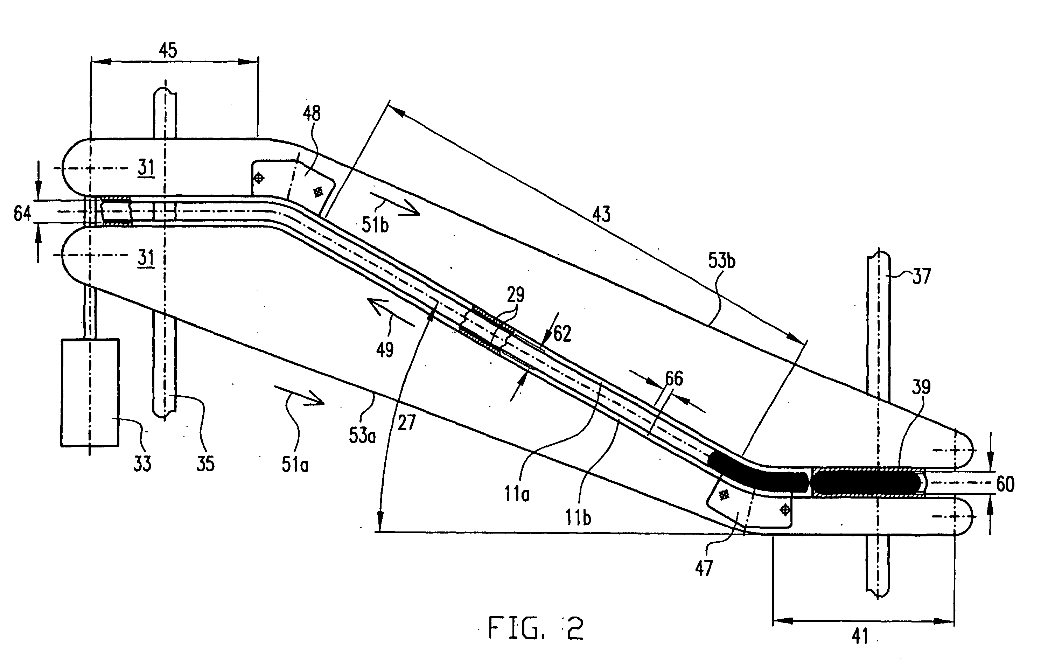

Figur 2 zeigt den Bereich der Transportbänder 11a und 11b der erfindungsgemäßen Ausführungsform 9 im Detail. Die Transportbänder 11a und 11b weisen Profilauflagen 29 auf, die in Figur 2 nur andeutungsweise gezeigt sind und dem sicheren Halten der Würste dienen. Die Endlostransportbänder 11a, 11b werden auf Führungsschienen 31 geführt und beide von einem Motor 33 angetrieben. Mit 39 ist eine eintretende Wurst bezeichnet. In einem ersten Bereich 41 sind die Transportbänder 11a, 11b derart angeordnet, dass sie waagerecht über eine gewisse Strecke, in der Praxis etwas mehr als 15 cm, in Richtung 19 transportieren. Im Bereich 41 ist der Abstand der Transportbänder 11a, 11b mit 60 bezeichnet und etwas kleiner als das Kaliber einer Wurst 39, das typischerweise im Bereich von 1 bis 5 cm liegt. Im Anschluss an den Bereich 41 bewegen sich die Transportbänder 11a, 11b um den Winkel 27, z.b von ca. 30° nach oben in Richtung 49. In dem schrägen Bereich 43 ist der Abstand 62 zwischen den Transportbändem 11a, 11b etwas größer als der Abstand 60 im ersten Bereich 41. Im Anschluss an den schrägen Bereich 43 werden die Transportbänder 11a, 11b durch die Führungsschienen 31 wiederum in die waagerechte Transportrichtung bewegt. Über einen Bereich 45 laufen die Transportbänder 11a, 11b wiederum parallel in Richtung 19. Im dritten Bereich 45 ist der Abstand 64 zwischen den Transportbändern 11a, 11b wiederum kleiner als der Abstand 62 im schrägen Bereich 43. Die absolute Größe des Abstandes 64 im dritten Bereich 45 kann jedoch größer sein als das Füllkaliber einer Wurst. 35 und 37 stellen in schematischer Ansicht Spindelgetriebe dar, mit denen der Abstand zwischen den Transportbändern 11a, 11b auf verschiedene Wurstkaliber eingestellt werden kann, typischer weise in einem Verstellbereich von ca. 10 bis ca. 50 mm.

Die Endlosbänder 11a, 11b werden in den Rückführungsbereichen 53a bzw. 53b von den Führungsschienen 31 entlang der Richtungen 51a, 51b wieder zurückgeführt.

In dem schrägen Bereich 43 sind die Transportbänder 11a, 11b relativ zueinander verschoben. Zwei Punkte auf den Transportbändern 11a bzw. 11b, die sich im ersten 41 bzw. dritten 45 waagerechten Bereich direkt gegenüberstehen, haben im schrägen Bereich 43 einen longitudinalen Abstand 66 in der Bewegungsrichtung 49 zueinander, der dadurch entsteht, dass im ersten Ablenkungsbereich zwischen dem ersten Bereich 41 und dem schrägen Bereich 43 das obere Transportband 11a einen kleineren Weg zurücklegen muss als das untere Transportband 11b.

Die Ablenkung der Transportbänder 11a, 11b wird mit Hilfe der Führungsschienen 31 erreicht, die entsprechende Kulissen aufweisen. Im Speziellen sind Führungsschienen 47, 48 vorgesehen, die die jeweils äußeren Transportbänder 11b bzw. 11a in dem Ablenkbereich zwischen den Bereichen 41 und 43 bzw. 43 und 45 gewährleisten.

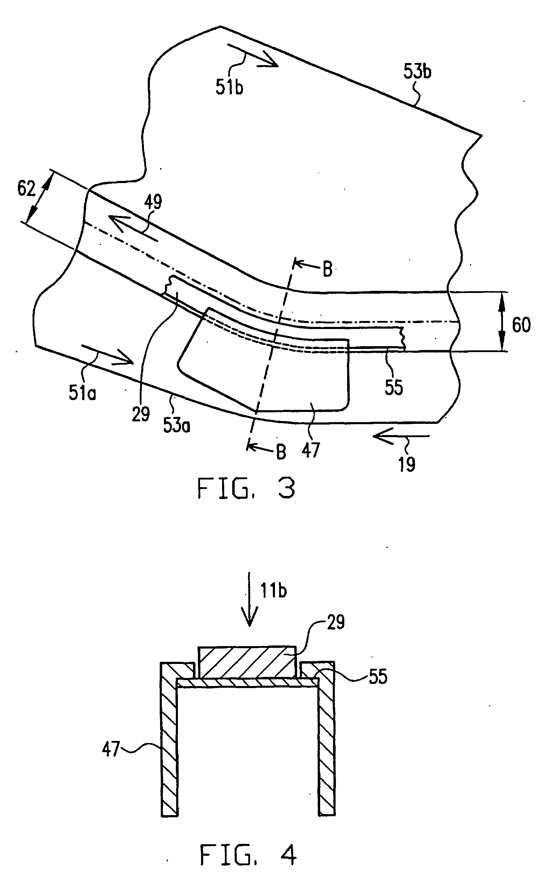

Die Kurvenschiene 47 ist im Detail in Figur 3 gezeigt. Die Kurvenschiene 48 ist analog aufgebaut.

Nur teilweise angedeutet ist in Figur 3 die Profilauflage 29 für das Transportband 11b. Die Profilauflage von dem Transportband 11 a ist nicht gezeigt. Ebenso in Figur 3 nur angedeutet ist ein unterfassender Bereich 55, der mit Bezug zu der Figur 4 näher erläutert wird. Sowohl die Profilauflage 29 als auch der unterfassende Bereich 55 sind in Figur 3 nur in dem Bereich der Kurvenschiene 47 gezeigt, erstrecken sich aber entlang des gesamten Endlostransportbandes 11b bzw. 11a.

Figur 4 zeigt einen Schnitt durch die Führungsschienen in Blickrichtung B der Figur 3.

Das Transportband 11b besteht aus einem unterfassenden Bereich 55 mit der Profilauflage 29. Der unterfassende Bereich 55 greift unter einen Ansatz der Führungsschiene 47, so dass auch im Außenkurvenbereich eine sichere Führung gewährleistet ist.

Mit der erfindungsgemäßen Vorrichtung kann wie folgt gearbeitet werden.

Zunächst wird mit Hilfe der Spindeln 35, 37 der Abstand zwischen den Transportbändern 11a, 11b im dritten 45 bzw. ersten 41 Bereich eingestellt. Dabei wird der Abstand 60 im ersten Bereich etwas kleiner als der gewünschte Wurstdurchmesser gewählt und der Abstand im Bereich 45 so dass er etwa dem Füllkaliber entspricht, wobei abhängig vom Kaliber +/- Toleranzen im Bereich von 1-3 mm möglich sind. Der Abstand 62 zwischen den Transportbändern 11a, 11b im schrägen Bereich 43 ergibt sich durch die Einstellung der Abstände 60 bzw. 64 im ersten bzw. dritten Bereich.

Die Lage bzw. der Verlauf der Führungsschienen 31 der Transportbänder 11a, 11b ist jedoch derart, dass der Abstand 62 der Transportbänder im zweiten Bereich 43 sowohl größer als der Abstand 60 im ersten Bereich 41 als auch der Abstand 64 im dritten Bereich ist.

Die Füllmaschine 1 wird durch den Trichter 3 befüllt. Auf dem Füllrohr 5 ist eine Darmraupe aufgebracht. Das Wurstbrät tritt aus der Füllmaschine durch das Füllrohr in die Darmraupe ein und wird im ersten Bereich 41 von den Transportbändern 11a, 11b erfasst und in Richtung 19 abtransportiert. In bekannter Weise wird mit Hilfe des Abdrehgetriebes 7 eine Abteilstelle nach jeder gewünschten Wurstlänge erzeugt. Auf diese Weise entsteht eine Wurstkette, die von der Transportvorrichtung 9 weitertransportiert wird. Die Wurstkette wird in Richtung 43 um den Winkel 27 abgelenkt und bewegt sich schräg nach oben. Durch den etwas größeren Abstand 62 der Transportbänder 11a, 11b im zweiten Bereich 43 ist gewährleistet, dass die Verschiebung 66, die zwischen den Transportbändem 11a, 11b aufgrund der ungleichen Verfahrwege der Transportbänder 11a, 11b im Ablenkungsbereich zwischen dem ersten Bereich 41 und dem zweiten Bereich 43 auftritt, zu keiner Verletzung der jeweiligen Wursthülle führt, weil dort die Reibung dann nur sehr gering ist.

Auch im Ablenkungsbereich selbst ist die Verletzungsgefahr verringert, da der Abstand der Transportbänder 11a, 11b vom Bereich 41 zum Bereich 43 hin größer wird.

Im Anschluss an den Bereich 43 wird wiederum die Wurstkette von den Transportbändem 11a, 11b in die Waagerechte befördert. Über den dritten Bereich 45 wird die Wurstkette waagerecht transportiert und an die Aufhängeeinheit 13 übergeben. Dort wird sie von einer Einfädeleinheit 17 in bekannter Weise auf die Aufhängehaken 15 aufgebracht.

Während sich der erste Bereich der Transportvorrichtung 9 in der Höhe 21 über dem Boden befindet, die der Höhe des Füllrohres 5 der Wurstmaschine entspricht, wird durch die schräge Bewegung nach oben im Bereich 43 der Wurstsstrang um die Höhe 25 auf die höhere Höhe 23 gebracht.

Die Höhe 23 kann dabei derart gewählt sein, dass eine Bedienungsperson problemlos unterhalb der Aufhängeeinheit 13 arbeiten kann, um z.B. Wurstenden zu verknüpfen oder bei verletztem oder gerissenem Darmmaterial eingreifen zu können. Trotzdem braucht die Höhe der Füllmaschine 1 nicht verändert werden, so dass ein leichtes Befüllen durch den Trichter weiterhin möglich ist und Sicherheitsvorkehrungen bezüglich der Höhe der Maschinenbauteile eingehalten werden.

Die erfindungsgemäße.Ausführungsform 9 der Erfindung ist jeder Stelle einsetzbar, an der der Wurststrang in seiner Transportrichtung geändert werden soll. Besonders vorteilhaft ist sie jedoch in der beschriebenen Form anwendbar, um den Wurststrang aus der geringen Höhe 21 des Befüllrohres 5 auf eine höhere Höhe 23 für die Aufhängeeinheit 13 zu bringen, so dass dort problemlos unterhalb der Anlage gearbeitet werden kann.

## Patentansprüche

1. Verfahren zur Lageänderung von Wurstketten bei der Wurstherstellung mit zwei parallel angeordneten Endlostransportbändem (11a, 11b), bei dem
- die Würste (39) der Wurstkette in einer ersten Richtung zwischen die Transportbänder (11a, 11b) übergeben werden,
- von diesen über eine erste Länge (41) in der ersten Richtung transportiert werden,
- dann von den Transportbändern (11a, 11b) in eine zweite Richtung (49) abgelenkt werden, und
- über eine zweite Länge (43) in der zweiten Richtung (49) auf größere Höhe transportiert werden,
wobei der Abstand (62) zwischen den Transportbändern während des Transportes in der zweiten Richtung (49) größer gewählt wird, als während des Transportes in der ersten Richtung.

2. Verfahren nach Anspruch 1, bei dem der Abstand (60) der Transportbänder (11a, 11b) während des Transportes in der ersten Richtung kleiner oder gleich dem Füllkaliber der Würste (39) ist.

3. Verfahren nach einem der Ansprüche 1 oder 2, bei dem die Würste im Anschluss an den Bereich des Transportes in der zweiten Richtung (49) von den Transportbändern (11a, 11b) in eine dritte Richtung abgelenkt werden, die zur ersten Richtung parallel ist, und über eine dritte Länge (45) in der dritten Richtung transportiert werden,
wobei der Abstand (64) der Transportbänder (11a, 11b) während des Transportes in der dritten Richtung kleiner als der Abstand (62) der Transportbänder (11a, 11b) während des Transportes in der zweiten Richtung gewählt ist.

4. Verfahren nach Anspruch 3, bei dem der Abstand der Transportbänder (11a, 11b) während des Transportes in der dritten Richtung etwa gleich dem Füllkaliber der Würste ist.

5. Verfahren nach einem der Ansprüche 1 bis 4, bei dem die Würste in der ersten Richtung waagerecht transportiert werden.

6. Vorrichtung zur Veränderung der Lage einer Wurstkette bei der Wurstherstellung mit zwei parallelen Endlostransportbändern (11a, 11b) mit
- einem ersten Bereich (41) zum Transport der Wurstkette in einer ersten Richtung, in dem die Transportbänder (11a, 11b) einen ersten Abstand voneinander aufweisen,
- einem ersten Ablenkungsbereich, in dem die Transportbänder (11a, 11b) parallel zueinander aus der ersten Richtung in eine zweite Richtung (49) abgelenkt werden,
- einen zweiten Bereich (43) zum Transport der Wurstkette auf größere Höhe in der zweiten Richtung, in der die Transportbänder (11a, 11b) einen zweiten Abstand (62) voneinander aufweisen,
wobei der zweite Abstand (62) größer als der erste Abstand (60) ist.

7. Vorrichtung nach Anspruch 6, bei der der erste Abstand (60) kleiner oder gleich dem Kaliber der zu transportierenden Würste (39) ist.

8. Vorrichtung nach einem der Ansprüche 6 oder 7, mit
einem zweiten Ablenkungsbereich, in dem die Transportbänder (11a, 11b) parallel zueinander aus der zweiten Richtung (49) in eine dritte Richtung abgelenkt werden, die parallel zur ersten Richtung ist, und
einem dritten Bereich (45) zum Transport der Wurstkette in der dritten Richtung, in dem die Transportbänder (11a, 11b) einen dritten Abstand (64) voneinander aufweisen, der kleiner als der zweite Abstand (62) ist.

9. Vorrichtung nach Anspruch 8, bei der dritte Abstand (64) etwa dem Kaliber der zu transportierenden Würste (39) entspricht.

10. Vorrichtung nach Anspruch 8 oder 9, mit einer Einstelleinrichtung (35) zur Einstellung des dritten Abstandes (64).

11. Vorrichtung nach einem der Ansprüche 6 bis 10, mit einer Einstelleinrichtung (37) zum Einstellen des ersten Abstandes (60).

12. Vorrichtung nach einem der Ansprüche 6 bis 11, mit einer Einstelleinrichtung zum Einstellen des zweiten Abstandes (62).

13. Vorrichtung nach einem der Ansprüche 10 bis 12, bei der die Einstellvorrichtung bzw. die Einstellvorrichtungen (35, 37) eine Spindel bzw. Spindeln umfasst.

14. Vorrichtung nach einem der Ansprüche 6 bis 13, bei der die Transportbänder (11a, 11b) von demselben Motor (33) angetrieben werden.

15. Vorrichtung nach einem der Ansprüche 6 bis 14, bei der die erste Richtung waagerecht ist.

16. Verwendung einer Vorrichtung nach einem der Ansprüche 6 bis 15 zur Übergabe einer Wurstkette von einer Abdrehstation (7) zu einer Aufhängestation (13).

17. Verwendung eines Verfahrens nach einem der Ansprüche 1 bis 7 zur Übergabe einer Wurstkette von einer Abdrehstation (7) zu einer Aufhängestation (13).

## Claims

1. Method of changing the position of chains of sausages in sausage production with two endless conveyor belts (11a, 11b) arranged in parallel, in which
- the sausages (39) of the chain of sausages are transferred between the conveyor belts (11a, 11b) in a first direction,
- conveyed thereby over a first length (41) in the first direction,
- then deflected by the conveyor belts (11a, 11b) into a second direction (49) and
- conveyed over a second length (43) in the second direction (49) to a higher level,
the distance (62) between the conveyor belts during conveying in the second direction (49) being greater than during conveying in the first direction.

2. Method according to claim 1, in which the distance (60) between the conveyor belts (11a, 11b) during conveying in the first direction is smaller than or equal to the filling diameter of the sausages (39).

3. Method according to one of claims I or 2, in which, after the region of conveying in the second direction (49), the sausages are deflected by the conveyor belts (11a, 11b) into a third direction parallel to the first direction and conveyed over a third length (45) in the third direction, the distance (64) between the conveyor belts (11a, 11b) during conveying in the third direction being smaller than the distance (62) between the conveyor belts (11a, 11b) during conveying in the second direction.

4. Method according to claim 3, in which the distance between the conveyor belts (11a, 11b) during conveying in the third direction is approximately equal to the filling diameter of the sausages.

5. Method according to one of claims 1 to 4, in which the sausages are conveyed horizontally in the first direction.

6. Device for changing the position of a chain of sausages in sausage production with two parallel endless conveyor belts (11a, 11b), comprising
- a first region (41) for conveying the chain of sausages in a first direction in which the conveyor belts (11a, 11b) are at a first distance from one another,
- a first deflection region in which the conveyor belts (11a, 11b) are deflected in parallel from the first direction to a second direction (49), and
- a second region (43) for conveying the chain of sausages to a higher level in the second direction in which the conveyor belts (11a, 11b) are at a second distance (62) from one another,
the second distance (62) being greater than the first distance (60).

7. Device according to claim 6, in which the first distance (60) is smaller than or equal to the diameter of the sausages (39) to be conveyed.

8. Device according to one of claims 6 or 7, comprising a second deflection region in which the conveyor belts (11a, 11b) are deflected in parallel from the second direction (49) to a third direction parallel to the first direction, and a third region (45) for conveying the chain of sausages in the third direction in which the conveyor belts (11a, 11b) are at a third distance (64) from one another, which is smaller than the second distance (62).

9. Device according to claim 8, in which the third distance (64) corresponds approximately to the diameter of the sausages (39) to be conveyed.

10. Device according to claim 8 or claim 9, comprising an adjusting means (35) for adjusting the third distance (64).

11. Device according to one of claims 6 to 10, comprising an adjusting means (37) for adjusting the first distance (60).

12. Device according to one of claims 6 to 11, comprising an adjusting means for adjusting the second distance (62).

13. Device according to one of claims 10 to 12, in which the adjusting device or adjusting devices (35, 37) include(s) a spindle or spindles.

14. Device according to one of claims 6 to 13, in which the conveyor belts (11a, 11b) are driven by the same motor (33).

15. Device according to one of claims 6 to 14, in which the first direction is horizontal.

16. Use of a device according to one of claims 6 to 15 for transferring a chain of sausages from a twisting station (7) to a hanging station (13).

17. Use of a method according to one of claims 1 to 7 for transferring a chain of sausages from a twisting station (7) to a hanging station (13).

## Revendications

1. Procédé pour changer la position de chapelets de saucisses lors de la fabrication de saucisses avec deux bandes transporteuses sans fin (11a, 11b) disposées parallèlement, selon lequel
- les saucisses (39) du chapelet sont transférées dans une première direction entre les bandes transporteuses (11a, 11b),
- sont transportées par ces dernières sur une première longueur (41) dans la première direction,
- sont ensuite déviées par les bandes transporteuses (11a, 11b) dans une deuxième direction (49), et
- sont transportées à une hauteur supérieure sur une deuxième longueur (43) dans la deuxième direction (49),
l'écartement (62) des bandes transporteuses pendant le transport dans la deuxième direction (49) étant choisi plus grand que pendant le transport dans la première direction.

2. Procédé suivant la revendication 1, selon lequel l'écartement (60) des bandes transporteuses (11a, 11b) pendant le transport dans la première direction est inférieur ou égal au calibre de remplissage des saucisses (39).

3. Procédé suivant l'une des revendications 1 et 2, selon lequel les saucisses, à la suite de la zone de transport dans la deuxième direction (49), sont déviées par les bandes transporteuses (11a, 11b) dans une troisième direction parallèle à la première, et sont transportées sur une troisième longueur (45) dans la troisième direction,
l'écartement (64) des bandes transporteuses (11a, 11b) pendant le transport dans la troisième direction étant choisi plus petit que l'écartement (62) des bandes transporteuses (11a, 11b) pendant le transport dans la deuxième direction.

4. Procédé suivant la revendication 3, selon lequel l'écartement des bandes transporteuses (11a, 11b) pendant le transport dans la troisième direction est à peu près égal au calibre de remplissage des saucisses.

5. Procédé suivant l'une des revendications 1 à 4, selon lequel les saucisses sont transportées horizontalement dans la première direction.

6. Dispositif pour changer la position d'un chapelet de saucisses lors de la fabrication de saucisses avec deux bandes transporteuses sans fin parallèles (11a, 11b,), comprenant
- une première zone (41) pour le transport du chapelet de saucisses dans une première direction, dans laquelle les bandes transporteuses (11a, 11b) présentent un premier écartement mutuel,
- une première zone de déviation, dans laquelle les bandes transporteuses (11a, 11b) sont déviées parallèlement entre elles de la première direction dans une deuxième direction (49),
- une deuxième zone (43) pour le transport du chapelet de saucisses à une hauteur supérieure dans la deuxième direction, dans laquelle les bandes transporteuses (11a, 11b) présentent un deuxième écartement mutuel (62),
le deuxième écartement (62) étant supérieur au premier écartement (60).

7. Dispositif suivant la revendication 6, dans lequel le premier écartement (60) est inférieur ou égal au calibre des saucisses (39) à transporter.

8. Dispositif suivant l'une des revendications 6 et 7, comprenant
une deuxième zone de déviation dans laquelle les bandes transporteuses (11a, 11b) sont déviées parallèlement entre elles de la deuxième direction (49) dans une troisième direction parallèle à la première direction, et
une troisième zone (45) pour le transport du chapelet de saucisses dans la troisième direction, dans laquelle les bandes transporteuses (11a, 11b) présentent un troisième écartement mutuel (64) inférieur au deuxième écartement (62).

9. Dispositif suivant la revendication 8, dans lequel le troisième écartement (64) correspond à peu près au calibre des saucisses (39) à transporter.

10. Dispositif suivant l'une des revendications 8 et 9, comprenant un dispositif de réglage (35) pour régler le troisième écartement (64).

11. Dispositif suivant l'une des revendications 6 à 10, comprenant un dispositif de réglage (37) pour régler le premier écartement (60).

12. Dispositif suivant l'une des revendications 6 à 11, comprenant un dispositif de réglage pour régler le deuxième écartement (62).

13. Dispositif suivant l'une des revendications 10 à 12, dans lequel le ou les dispositifs de réglage (35, 37) comportent une ou des broches.

14. Dispositif suivant l'une des revendications 6 à 13, dans lequel les bandes transporteuses (11a, 11b) sont entraînées par le même moteur (33).

15. Dispositif suivant l'une des revendications 6 à 14, dans lequel la première direction est horizontale.

16. Utilisation d'un dispositif suivant l'une des revendications 6 à 15 pour le transfert d'un chapelet de saucisses d'un poste de séparation par torsion (7) à un poste d'accrochage (13).

17. Utilisation d'un procédé suivant l'une des revendications 1 à 7 pour le transfert d'un chapelet de saucisses d'un poste de séparation par torsion (7) à un poste d'accrochage (13).
